# EUROPEAN PATENT SPECIFICATION

(11) **EP 0 523 020 B1**
(45) Date of publication and mention of the grant of the patent: **28.02.1996**
(21) Application number: 92850153.5
(22) Date of filing: 22.06.1992
(51) Int. Cl.: F16L 19/065, F16L 19/10

(54) **A reduction device**
Reduzierverbinder für Rohre
Raccord à réduction pour tubes

(30) Priority: 24.06.1991 SE 9101933
(43) Date of publication of application: 13.01.1993
(73) Proprietor: AB STACKE METALLARMATUR, S-335 00 Gnosjö (SE)
(72) Inventor: Crivoi, Alexander, S-335 00 Gnosjö (SE)
(74) Representative: Lindberg, Klas Valter Bo

(56) References cited:
- EP-A- 0 396 367
- SE-B- 344 360
- SE-B- 449 783
- SE-C- 118 388

## Description

### Technical Field

The subject invention concerns a reduction device for pipe fittings of the kind wherein at least one reduction device in the shape of one single continuous component is positioned in a pipe fitting, such as a straight fitting, a V-shaped, a T-shaped or an X-shaped fitting, in order to adapt the fitting component in the associated fitting section to a pipe having smaller external dimensions (see, for instance, the SE-B-449 783).

### Background of the Invention

In hydraulic and pneumatic piping systems pipe fittings or unions are generally used in order to join together various pipes and components. It may, for instance, be desirable to interconnect two or several pipes of different dimensions, or to connect them to another component in the system. Normally, pipes having an external diameter of between 6 and 42 mm are used, in eleven standard sizes. One consequence is a very large number of possible combinations wherever pipes are to be interconnected or connected to components incorporated in a pipe system. Straight fittings have two inlets, T-shaped pipe fittings have three and X-shaped fittings have four inlets. As a result, a very large number of different pipe fittings must be manufactured and kept in stock in order to meet existing needs.

In consideration of these problems reduction devices have been developed. The reduction device is inserted into the desired section in the pipe fitting and thus adapts the latter in such a manner that a smaller-dimensioned pipe may be used. In this manner the need for a large range of different pipe fittings is greatly reduced. For example, with the aid of reduction devices the number of T-shaped pipe fittings may be decreased from 110 to 18. The use of reduction devices also results in lower overall The use of reduction devices also results in lower overall costs for storage, etcetera. The reduction device has two funtions. As mentioned in the aforegoing, one of its purposes is to adapt the fitting to smaller-dimensioned pipes. In addition, as the pipe fitting nut is tightened, it should clamp the pipe so as to ensure that the latter will be safely secured. One prior-art type of reduction device that functions well comprises three different parts. This is a complication during assembly while at the same time there is a risk that some part is forgotten. For these reasons one-piece reduction devices have been developed. One example of such a reduction device is of a type known as the FPL-type. This device comprises two external conical faces and when they are affected by the pipe fitting nut as the latter is tightened, the reduction device is compressed about the pipe so as to retain the latter in position. The retaining force thus is a pure clamping force and not, like in the case of fittings of ferrule fitting type, a shape-dependent holding force. One consequence thereof is impaired securement of the pipe inside thy fitting. In order to obviate this disadvantage one-piece reduction devices have been developped that are formed with a fractural impression along which the reduction device will break when tightened. After the fracture, the device is in two pieces, one of which has a front edge in the shape of an external conical face and the other one of which has an internal conical face cooperating therewith. Upon continued tightening, the conical front edge of the first piece thus will be forced into and pressed into the pipe wall, creating a shape-dependent hold and thus a more reliable securement of the pipe.

However, also this solution suffers from drawbacks. Owing to the fracture, a rough fracture area will appear near the front edge of the external conical face and a corresponding raw fracture area on the corresponding internal contacting conical face. This increases the resistance upon tightening of the fitting compared with what would have been the case, had the conical surfaces been smooth. As a result, the required tightening moment will be unecessarily large. In addition, the rough fracture area at the front edge of the external conical face may come into contact with the pipe when the tightening step has progressed comparatively far. Should this happen, the rough fracture area may bring the pipe along in its displacement and twist the latter in case the outer part of the reduction device rotates together with the nut. Although said part is designed to minimize the risk for such co-rotation, the phenomenon still occurs comparatively often. In addition, complex manufacturing operations are required in order to produce the desired fractural impression. An internal groove is to be slotted inside the reduction device in such a manner as to ensure that a material thickness of about 0.2 mm remains from theexternal machined surface. This operation requires a high degree of accuracy and is expensive. The strict requirements on'the execution of the fractural impression also cause uncertainty since flaws, albeit minute, result in considerable variations of the tightening moment before fracture occurs.

### The Purpose of the Invention

The purpose of the subject invention is to considerably reduce the problems outlined above by suggesting a reduction device for pipe fittings in the shape of one single continuous component wherein no fractures are needed to obtain its division into two parts.

### Summary of the Invention

The above-mentioned purpose is achieved by providing the reduction device in accordance with the invention with the characteristic features defined in the appended claims.

Thus the reduction device in accordance with the invention is essentially characterized in that it is designed as one continuous component comprising two pieces which are united in a manner allowing relative rotation of the pieces and which are held together for instance by means of flanging-over or snapping-over of one of the pieces, the sleeve piece, onto the other piece, the nut piece. The sleeve piece is formed with an internal conical face which, upon tightening of the pipe fitting, cooperates with an external conical face on the nut piece, whereby the front edge of the external conical face will be forced into the pipe and thus create a shaped-dependent bond with the pipe.

Because the reduction device is manufactured as two separate pieces which may later be assembled, each piece may be given an optimum configuration and be made from an optimally suitable material. The nut piece, the front edge of which is forced into the pipe wall while being exposed to considerable deformation forces, could be exposed e.g. to a soft-annealing treatment to ensure that it does not crack while being so highly deformed. Should, on the other hand, the reduction device have been manufactured as a part formed with a fractural impression, it would not have been possible to expose it to such a soft-annealing treatment, since in this case the internal conical face would have been negatively affected while at the same time the fracture would have been more difficult to achieve and the fracture areas would have taken on an unsuitable shape. By the division into two pieces the machining of the operative external and internal conical surfaces may be performed in a safer and more reliable manner. Since no rough fracture areas exist, the cooperation between the internal and external conical surfaces will be effected with reduced losses, i.e. the tightening of the pipe fitting will be easier to perform. The conical surfaces could also be exposed to a friction-reducing treatment, for instance by specialty grease, since the reduction device consists of two separate pieces which are later assembled. This feature may be of particular interest in the case of large-pipe fittings, where it would otherwise have been difficult as well as time-consuming to obtain a satisfactory degree of tightening by means of hand tools. Additionally, both pieces of the reduction device may be manufactured from entirely different materials, each material imparting optimum properties to its piece.

Reduction devices are designed in such a manner as to preferably be prevented from rotating together with the nut piece upon tightening of the pipe fitting, which rotation may cause the pipe to be twisted. However, co-rotation of the reduction device may occur nonetheless. In the reduction device in accordance with the invention such co-rotation as a rule is limited to the nut piece whereas in the case of conventional solutions involving fractural impressions, the risk of co-rotation of the sleeve piece as well is considerably more imminent, the reason being that before the fracture, the two pieces are joined together and must take part in each other's movement, and that after the fracture the resulting rough fracture area increases the friction between the pieces and consequently the risks for co-rotation. In all, this means that the risks for torsional movements of the pipe are reduced with the reduction device in accordance with the invention.

### Brief Description of the Drawings

The invention will be described in closer detail in the following with reference to one embodiment thereof and to the accompanying drawings, on which identical numeral references are used for corresponding details throughout. In the drawings:

Fig. 1 illustrates a pipe fitting together with a matching reduction device, a pipe and a nut. For purposes of clarity the pieces are shown as pulled apart to the imagined position before mounting.

Fig. 2 illustrates a reduction device prior to being assembled into one continuous part.

Fig. 3 illustrates the manner in which the pipe fitting, the reduction device, pipe and nut are assembled and only slightly tightened.

Fig. 4 illustrates the pieces in accordance with Fig. 3 after complete tightening and thus locking of the pipe.

### Detailed Description of Embodiments

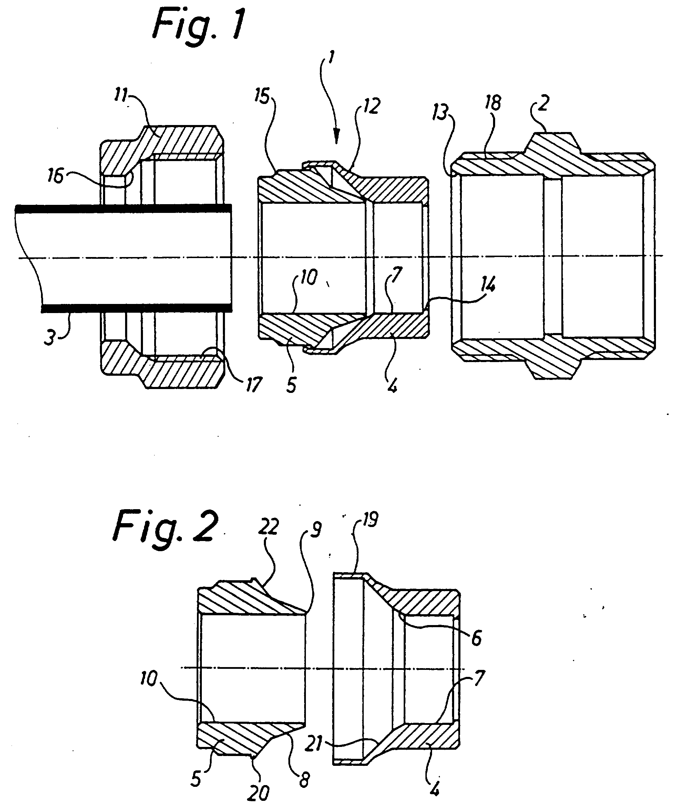

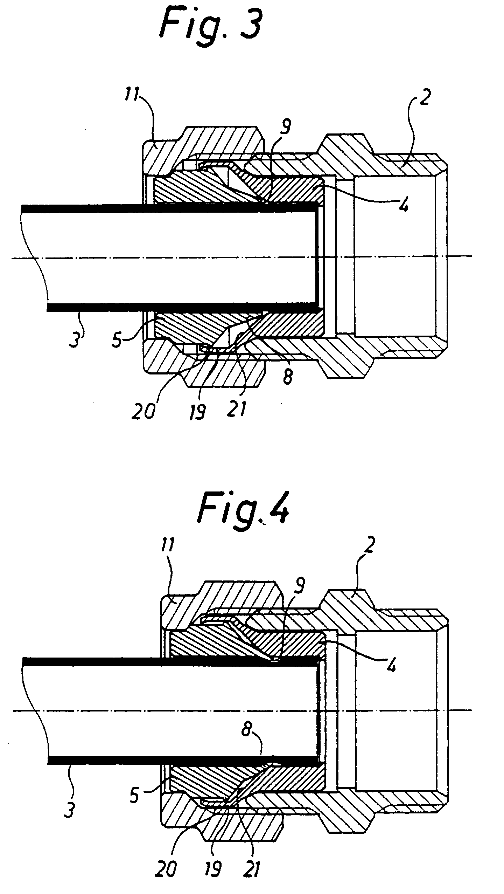

In Fig. 1, numeral 1 designates a reduction device intended to be introduced axially into a pipe fitting 2. For the sake of clarity, the pieces are shown in their pulled-apart position. The reduction device 1 thus is introduced axially to the right as seen in the drawing into the straight fitting 2. The conical face 12 of the reduction device 1 will then axially abut against the conical face 13 of the fitting 2. A pipe 3 is then introduced axially, to the right, into the reduction device 1. Some clearance exists radially between the mentioned parts, allowing them to be easily inserted into each other axially. The pipe 3 is introduced into the reduction device 1 until further displacement is prevented by a stop face 14. The nut 11 is then moved axially, to the right in accordance with the drawing figure, so as to extend in over the reduction device 1 and the pipe fitting 2. The nut is formed with internal threads 17 cooperating with corresponding threads 18 formed on the pipe fitting 2 as the nut 11 is tightened. Slight tightening of the nut 11 results in the assembly position illustrated in Fig. 3. Further tightening of the nut 11 will result in deformation of the reduction device 1 and of the pipe 3. When the tightening is complete, the assembled position is that illustrated in Fig. 4.

The reduction device 1 in accordance with the invention comprises two pieces, one being a sleeve piece which is designated by reference 4, and the other a nut piece which is designated by 5. In Fig. 2, the two pieces are shown axially spaced apart, i.e. in their condition before being assembled into one unit. In assembling the device, the sleeve piece 4 is moved axially onto the nut piece 5. An outer portion 19 of the sleeve 4 will then climb over and enclose a projecting edge 20 on the outer periphery of the nut piece. Flanging-over of the outer portion 19 is effected by compressing it behind the edge 20. In this manner, the two pieces can no longer be pulled apart but are axially interlocked. On the other hand they may still be turned with respect to each other, which is of importance for their function. Also other securing methods resulting in axial anchorage of the pieces while retaining their ability for mutual turning movement are feasible. As one example may be mentioned snap locking of the pieces. The sleeve and nut pieces are formed with cylindrical internal faces, 7 anad 10, respectively, having a diameter somewhat in excess of that of the pipe 3, allowing convenient introduction of the latter into and through the reduction device 1. The sleeve piece 4 is formed with an internal conical face 6 which cooperates with an external conical face 8 on the nut piece when the pipe is mounted in the pipe fitting. The conical face 6 is arranged in adjoining relationship with the internal cylindrical face 7 of the sleeve. Radially externally of the conical face 6 the sleeve is formed with a second conical face 21 the conical face angle of which is larger than that of the conical face 6, whereby some clearance is obtained towards the adjacent conical face 8 of the nut piece 5. The latter conical face extends to the internal cylindrical face 10 of the nut piece, where it forms a pointed front edge 9. By end machining of the front edge the latter is given a well balanced configuration. Radially externally of the conical face 8 a second conical portion 22 begins, the cone angle of which is steeper and agrees comparatively well with the cone angle of the second, internal conical face 21 of the sleeve piece 4.

Fig. 3 illustrates the pipe fitting 2 together with the reduction device 1 in a so called open position. In this position the pipe 3 may be pulled out or pushed through the reduction device. The nut 11 has been tightened loosely to ensure that the front edge 9 of the nut piece presses lightly against the internal conical face 6 of the sleeve piece 4. However, no deformation of the parts occurs. Upon further tightening of the nut piece 11, on the other hand, deformation of the front edge 9 of the nut piece and of the pipe 3 will take place, ensuring that the latter is securely clamped to the pipe fitting. As appears from Fig. 4, showing a fully tightened fitting, the front edge of the nut piece 5 has been guided by the conical face 6 of the sleve part inwards, into the pipe wall. In other words, the front edge 9 of the nut piece 5 as well as the area behind the edge have been compressed and the front edge cuts into the pipe 3. A strong shape-dependent engagement bond thus is created between the pipe fitting and the pipe, such that it becomes almost impossible to extract the pipe from the fitting. As appears from Fig. 4 a small axial clearance now exists between the respective conical faces 21 and 22 of the sleeve and nut pieces, which faces are located further outwards, radially. This clearance will disappear in case of further tightening. In this way the parts are driven entirely home into interengaging relationship and further tightening is rendered absolutely impossible. This is a safety feature since it guarantees that the pipe 3 is not severed-through by the front edge 9 of the nut piece 5 or that either the nut or the sleeve piece is damaged.

The strong compression occurring between the external conical face 8 and the internal conical face 6 ensures sealing against fluid medium leakages.

Because the reduction device 1 is formed as a two-piece component the pieces of which are subsequently joined together, each individual piece may be given an optimum configuration. The cone angles and the surface finishing may be designed freely to provide the optimum function and the material and heat treatment may be chosen optimally for each individual part. For instance, the nut piece 5 is soft-annealed to prevent it from cracking when exposed to the considerable compressive forces exerted upon it during the tightening operation. The sleeve piece, on the other hand, may be given sufficiently hardness to ensure that its internal conical face 6 is not damaged during the tightening process. Usually, the reduction device is made from metal, such as steel or brass, and it is used together with pipes of copper, steel or plastics. However, it is likewise possible to manufacture the reduction device from plastics for intended use together with pipes or tubes made of plastics or of rubber.

## Claims

1. A reduction device (1) for pipe fittings (2) of the kind, wherein at least one reduction device (1) in the shape of one single continuous component, is positioned in a pipe fitting (2), such as a straigth fitting (2), a V-shaped, a T-shaped or an X-shaped fitting, in order to adapt the fitting component in the associated coupling section to a pipe (3) having smaller external dimensions, **characterized** in that the reduction device (1) comprises two pieces (4, 5), one sleeve piece (4) and one nut piece (5), which pieces are united so as to be allowed mutual rotational movement and which are held together for instance by means of flanging-over or snapping-over of the sleeve piece (4) onto the nut piece (5), said sleve part (4) being formed with an internal conical face (6) closely adjacent an internal, essentially cylindrical face (7) in the sleeve piece (4) and the nut piece (5) being formed with at least one external conical face (8) cooperating with said internal conical face (6), a pointed front edge (9) of the nut piece (5) being formed where the conical face (8) and an internal, essentially cylindrical face (10) of the nut piece (5) meet closely adjacent the external face of the pipe, when the latter is in inserted position, said edge (9) being so positioned that upon tightening of a nut (11) the threads (17) of which cooperate with threads (18) formed on the pipe fitting (2), the nut piece (5) is forced forwards as a result of the contact between a face (16) on the nut (11) and a face (15) on the nut piece (5), whereby said front edge (9) is urged against the internal conical face (6) of the sleeve piece (4), the latter being supported inside the pipe fitting (2) in that surface (12) in the sleeve piece (4) cooperates with a surface (13) in the pipe fitting (2), the front edge (9) thus being guided by the internal conical face (6) inwards into the pipe (3) wall so as to create a shape-dependent engagement grip between the reduction device (1) and the pipe (3), and such that fluid-medium sealing contact is established on the one hand between the front edge (9) of the nut piece (5) and the pipe (3) and on the other between the external conical face (8) of the latter and the internal conical face (6) of the sleeve piece (4) as well as between the surface (12) on the sleeve piece (4) and the surface (13) on the pipe fitting (2).

2. A reduction device as claimed in claim 1, **characterized** in that the sleeve piece (4) is provided with an outer internal conical face (21), said face adjoining the radially outer end of the conical face (6) and creating a clearance towards the external conical face (8) of the nut piece, whereby the axial contact between the sleeve piece (4) and the nut piece (5) will take place essentially between the internal conical face (6) and the external conical face (8).

3. A reduction device as claimed in claim 1 or 2, **characterized** in that the nut piece (5) has an outer external conical face (22) which upon very strong tightening of the pipe fitting serves as an abutment face against the internal conical face (21) of the sleeve piece (4), preventing further tightening of the fitting and thus eliminating damages on the pipe (3), the nut piece (5) and the sleeve piece (4).

4. A reduction device as claimed in any one of the preceding claims, **characterized** in that the sleeve piece (4) is formed with an outer portion (19) which upon axial pushing together of the sleeve and nut pieces (4, 5), projects externally of and beyond a projecting edge (20) on the nut piece, whereby as a result of e.g. flanging-over or snapping-over of the outer portion (19) behind the projecting edge (20) the pieces (4, 5) are mutually interconnected but in a manner allowing them to be turned relatively one another.

5. A reduction device as claimed in claim 4, **characterized** in that the mutual interconnection between the nut and sleeve pieces (4,5), allowing said pieces to be turned relatively one another, is created by flanging-over of the outer portion (19) behind the projecting edge (20).

6. A reduction device as claimed in any one of the preceding claims, **characterized** in that the sleeve piece (4) is supported in the pipe fitting (2) by the cooperation of an external conical face (12) on the sleeve piece (4) with an internal conical face (13) of the pipe fitting (2) and whereby upon tightening of the nut (11) fluid-tight contact between said faces (12, 13) is created.

7. A reduction device as claimed in any one of the preceding claims, **characterized** in that the nut piece (5) is manufactured from a soft-annealed metal, ensuring that the piece is not negatively affected, e.g. does not crack, upon exertion of the strong deformation forces to which above all its front edge (9) is exposed as the nut (11) is being tightened, whereby e.g. leakages are prevented.

## Patentansprüche

1. Reduzierverbinder (1) für Rohrformstücke (2) desjenigen Typs, in dem zumindest ein Reduzierverbinder (1) in Form einer einzigen zusammenhängenden Komponente sich in einem Rohrformstück (2) befindet, beispielsweise einem geraden Formstück (2), einem V-förmigen, T-förmigen oder X-förmigen Formstück, um die Formstückkomponente in dem zugehörigen Verbindungsabschnitt einem Rohr (3) mit kleineren Aussenabmessungen anzupassen, dadurch **gekennzeichnet,** dass der Reduzierverbinder (1) zwei Stücke (4, 5) umfasst, und zwar ein Hülsenstück (4) und ein Mutterstück (5), die zusammengefügt sind, so dass eine gegenseitige Drehbewegung gestattet wird, und die z.B. durch Umbördeln oder Überschnappen des Hülsenstücks (4) auf das Mutterstück (5) zusammengehalten sind, wobei das Hülsenstück (4) mit einer inwendigen kegelförmigen Fläche (6) dicht an einer inwendigen, hauptsächlich zylindrischen Fläche (7) im Hülsenstück (4) geformt ist, und das Mutterstück (5) mit mindestens einer auswendigen kegelförmigen Fläche (8) geformt ist, die mit der inwendigen kegelförmigen Fläche (6) zusammenwirkt, wobei eine spitzzulaufende Vorderkante (9) des Mutterstücks (5) dort geformt ist, wo die kegelförmige Fläche (8) und eine inwendige, hauptsächlich zylindrische Fläche (10) des Mutterstücks (5) sich dicht an der Aussenfläche des Rohrs begegnen, wenn sich das Rohr in der eingesteckten Lage befindet, wobei die Kante (9) so plaziert ist, dass beim Festziehen einer Mutter (11), deren Gewinde (17) mit einem am Formstück (2) geformten Gewinde (18) zusammenwirkt, das Mutterstück (5) vorwärts gepresst wird infolge der Berührung zwischen einer Fläche (16) der Mutter (11) und einer Fläche (15) des Mutterstücks (5), wodurch die genannte Vorderkante (9) gegen die inwendige kegelförmige Fläche (6) des Hülsenstücks (4) gepresst wird, wobei letzteres innerhalb des Rohrformstücks (2) dadurch getragen wird, dass eine Oberfläche (12) des Hülsenstücks (4) mit einer Oberfläche (13) des Rohrformstücks (2) zusammenwirkt, wobei die Vorderkante (9) somit von der inwendigen kegelförmigen Fläche (6) nach innen in die Wand des Rohrs (3) geführt wird, so dass ein formschlüssiger Eingriff zwischen dem Reduzierverbinder (1) und dem Rohr (3) geschaffen wird, und so dass eine gegen flüssiges Medium abdichtende Berührung zustandegebracht wird, und zwar einerseits zwischen der Vorderkante (9) des Mutterstücks (5) und dem Rohr (3) und andererseitz zwischen der auswendigen kegelförmigen Fläche (8) des Rohrs und der inwendigen kegelförmigen Fläche (6) des Hülsenstücks (4) sowie zwischen der Oberfläche (12) des Hülsenstücks (4) und der Oberfläche (13) des Rohrformstücks (2).

2. Reduzierverbinder nach Anspruch 1, dadurch **gekennzeichnet,** dass das Hülsenstück (4) mit einer äusseren inwendigen kegelförmigen Fläche (21) versehen ist, welche dem radial äusseren Ende der kegelförmigen Fläche (6) benachbart ist und einen Abstand von der auswendigen kegelförmigen Fläche (8) des Mutterstücks erzeugt, wodurch die axiale Berührung zwischen dem Hülsenstück (4) und dem Mutterstück (5) hauptsächlich zwischen der inwendigen kegelförmigen Fläche (6) und der auswendigen kegelförmigen Fläche (8) stattfinden wird.

3. Reduzierverbinder nach Anspruch 1 oder 2, dadurch **gekennzeichnet,** dass das Mutterstück (5) eine äussere auswendige kegelförmige Fläche (22) aufweist, welche beim sehr kräftigen Festziehen des Rohrformstücks als Anlagefläche gegen die inwendige kegelförmige Fläche (21) des Hülsenstücks (4) dient, wodurch ein weiteres Festziehen des Formstücks verhindert wird und somit Schäden an dem Rohr (3), dem Mutterstück (5) und dem Hülsenstück (4) verhindert werden.

4. Reduzierverbinder nach einem der vorhergehenden Ansprüche, dadurch **gekennzeichnet,** dass das Hülsenstück (4) mit einem äusseren Abschnitt (19) ausgebildet ist, welcher beim axialen Zusammenschieben der Hülsen- und Mutterstücke (4, 5) über eine vorragende Kante (20) des Mutterstücks hinausragt, wodurch infolge von z.B. Umbördeln oder Überschnappen des äusseren Abschnitts (19) hinter der vorragenden Kante (20) die Stücke (4, 5) nur so miteinander verbunden sind, dass sie im Verhältnis zueinander gedreht werden können.

5. Reduzierverbinder nach Anspruch 4, dadurch **gekennzeichnet,** dass die gegenseitige Verbindung der Mutter- und Hülsenstücke (4, 5), die das Drehen der genannten Stücke im Verhältnis zueinander gestattet, durch Umbördeln des äusseren Abschnitts (9) hinter der vorragenden Kante (20) erzeugt ist.

6. Reduzierverbinder nach einem der vorhergehenden Ansprüche, dadurch **gekennzeichnet,** dass das Hülsenstück (4) durch die Zusammenwirkung einer auswendigen kegelförmigen Fläche (12) des Hülsenstücks (4) mit einer inwendigen kegelförmigen Fläche (13) des Rohrformstücks (2) im Rohrformstück (2) getragen ist, wodurch beim Festziehen der Mutter (11) eine fluiddichte Berührung zwischen den Flächen (12, 13) zustandegebracht wird.

7. Reduzierverbinder nach einem der vorhergehenden Ansprüche, dadurch **gekennzeichnet,** dass das Mutterstück (5) aus einem weichgeglühten Metall hergestellt ist, wodurch gewährleistet ist, dass das Stück nicht negativ beeinflusst wird, beispielsweise nicht zerspringt, beim Anwenden der starken Deformationskräfte, denen vor allem seine Vorderkante (9) ausgesetzt ist, wenn die Mutter (11) festgezogen wird, wodurch beispielsweise Undichtigkeiten verhindert werden.

## Revendications

1. Dispositif à réduction (1) pour des raccords pour tubes (2) du type comprenant au moins un dispositif à réduction (1) sous forme d'un seul élément continu, qui est placé dans un raccord pour tubes (2), tel qu'un raccord droit (2) ou un raccord en V, en T ou en X, afin d'adapter l'élément de raccord dans la section de couplage y associée à un tube (3) de dimensions extérieures plus petites, **caractérisé** en ce qu'il comprend deux éléments (4, 5), à savoir un élément de manchon (4) et un élément d'écrou (5), qui sont interconnectés de manière à permettre la rotation mutuelle et qui sont maintenus ensemble, par exemple à l'aide de bordage ou d'encliquetage de l'élément de manchon (4) sur l'élément d'écrou (5), ledit élément de manchon (4) comprenant une surface conique interne (6) située près d'une surface interne sensiblement cylindrique (7) de l'élément de manchon (4), l'élément d'écrou (5) comprenant au moins une surface conique externe (8) qui coopère avec ladite surface conique interne (6), un bord avant pointu (9) de l'élément d'écrou (5) étant prévu là où la surface conique (8) et une surface interne sensiblement cylindrique (10) de l'élément d'écrou (5) se rencontrent près de la surface externe du tube, lorsque ce dernier se trouve dans une position insérée, ledit bord (9) étant placé de manière que, lors du serrage d'un écrou (11) dont les filets (17) coopèrent avec des filets (18) prévus sur le raccord pour tubes (2), l'élément d'écrou (5) soit poussé en avant à la suite du contact entre une surface (16) sur l'écrou (11) et une surface (15) sur l'élément d'écrou (5), par quoi ledit bord avant (9) est poussé contre la surface conique interne (6) de l'élément de manchon (4), ce dernier étant supporté à l'intérieur du raccord pour tubes (2) puisqu'une surface (12) dans l'élément de manchon (4) coopère avec une surface (13) dans le raccord pour tubes (2), le bord avant (9) étant ainsi guidé par la surface conique interne (6) vers l'intérieur dans la paroi de tube (3), de manière à créer une prise dépendante de forme entre le dispositif à réduction (1) et le tube (3), et établir un contact étanche au milieu fluide entre, d'une part, le bord avant (9) de l'élément d'écrou (5) et le tube (3) et, d'autre part, la surface conique externe (8) de ce dernier et la surface conique interne (6) de l'élément de manchon (4), ainsi qu'entre la surface (12) de l'élément de manchon (4) et la surface (13) du raccord pour tubes (2).

2. Dispositif à réduction selon la revendication 1, **caractérisé** en ce que l'élément de manchon (4) est muni d'une surface conique interne extérieure (21) attenant l'extrémité radialement extérieure de la surface conique (6) et créant un espacement à l'égard de la surface conique externe (8) de l'élément d'écrou, de manière que le contact axial entre l'élément de manchon (4) et l'élément d'écrou (5) ait lieu sensiblement entre la surface conique interne (6) et la surface conique externe (8).

3. Dispositif à réduction selon la revendication 1 ou 2, **caractérisé** en ce que l'élément d'écrou (5) possède une surface conique externe extérieure (22) qui, lors d'un serrage extrêmement fort du raccord pour tubes, sert de surface de butée contre la surface conique interne (21) de l'élément de manchon (4), ainsi empêchant le serrage additionnel du raccord et donc des dégâts au tube (3), à l'élément d'écrou (5) et à l'élément de manchon (4).

4. Dispositif à réduction selon l'une quelconque des revendications précédentes, **caractérisé** en ce que l'élément de manchon (4) comporte une partie extérieure (19) qui, lors d'un rapprochement axial de l'élément de manchon (4) et de l'élément d'écrou (5), fait saillie à l'extérieur et au-delà d'un bord en saillie (20) sur l'élément d'écrou, de manière que l'élément de manchon (4) et l'élément d'écrou (5) soient interconnectés, par exemple à la suite de bordage ou d'encliquetage de la partie extérieure (19) derrière le bord en saillie (20), mais d'une façon qui les permet d'être tournés l'un par rapport à l'autre.

5. Dispositif à réduction selon la revendication 4, **caractérisé** en ce que l'interconnexion entre l'élément de manchon (4) et l'élément d'écrou (5), permettant auxdits éléments d'être tournés l'un par rapport à l'autre, est créée par le bordage de la partie extérieure (19) derrière le bord en saillie (20).

6. Dispositif à réduction selon l'une quelconque des revendications précédentes, **caractérisé** en ce que l'élément de manchon (4) est supporté dans le raccord pour tubes (2) à la suite de la coopération entre une surface conique externe (12) de l'élément de manchon (4) et une surface conique interne (13) du raccord pour tubes (2), un contact étanche au milieu fluide étant ainsi créé entre lesdites surfaces (12, 13) lors du serrage de l'écrou (11).

7. Dispositif à réduction selon l'une quelconque des revendications précédentes, **caractérisé** en ce que l'élément d'écrou (5) est réalisé en un métal recuit doux, assurant que ledit élément n'est pas influencé de manière défavorable, par exemple ne se fêle pas, à la suite des forces de déformation considérables auxquelles surtout le bord avant (9) est exposé au cours du serrage de l'écrou (11), ainsi empêchant, entre autres, des fuites.
